# FASCICULE DE BREVET EUROPEEN

(11) **EP 0 493 635 B1**
(45) Date de publication et mention de la délivrance du brevet: **23.09.1998**
(21) Numéro de dépôt: 90403746.2
(22) Date de dépôt: 21.12.1990
(51) Int. Cl.: G03B 21/60

(54) **Répartiteur de rayonnement électromagnétique notamment écran de projection**
Verteiler von elektromagnetischer Strahlung, insbesondere Projektionsschirm
Distributor of electromagnetic radiation, particularly a projection screen

(43) Date de publication de la demande: 08.07.1992
(73) Titulaire: MALIFAUD, Pierre, F-75014 Paris (FR); Vuillaume, Gérard, Marcel, Louis, F-63170 Aubière (Puy de Dôme) (FR)
(72) Inventeur: MALIFAUD, Pierre, F-75014 Paris (FR); Vuillaume, Gérard, Marcel, Louis, F-63170 Aubière (Puy de Dôme) (FR)
(74) Mandataire: Rataboul, Michel Charles

(56) Documents cités:
- FR-A- 2 463 427
- US-A- 2 381 614
- US-A- 2 763 184
- US-A- 2 804 801
- US-A- 2 974 565
- US-A- 4 241 980
- PATENT ABSTRACTS OF JAPAN vol. 5, no. 1 (P-43)(673) 8 Janvier 1981 & JP-A-55 133 027 ( MATSUSHITA DENSHI KOGYO KK ) 16 Octobre 1980

## Description

Les rayonnements électromagnétiques sont rarement utilisés selon le flux directement émis par la source de rayonnement. On intercale en général entre la source émettrice et les récepteurs un répartiteur dont la fonction est, soit de concentrer ou au contraire de disperser, soit d'homogénéiser ou au contraire de créer certaines inhomogénéités, soit de diriger de façon particulière, en un mot de répartir de manière déterminée un rayonnement qui est plus souvent émis uniformément dans l'espace. Et cela dans tous les domaines spectraux des ondes électromagnétiques de toutes longueurs d'ondes des plus petites aux plus grandes, rayons gamma, rayons X, ultraviolet, lumière visible, infrarouge, rayonnement thermique, micro-ondes, ondes radio.

Ces répartiteurs sont des dispositifs optiques, au sens étendu de ce mot. Ils opèrent par leur forme géométrique et par la texture de leurs matériaux, qu'ils soient réfléchissants (catoptriques) ou transmetteurs (dioptriques), en infléchissant les directions de propagation de rayonnements. Le plus souvent, ils sont constitués par une ou plusieurs surfaces continues, miroirs, dioptres, lentilles, écrans. Quelquefois, ils sont constitués par une multitude d'éléments optiquement directionnels produisant par leur ensemble l'effet recherché. Tels sont, par exemple, les lentilles de Fresnel, les réflecteurs d'éclairage à facettes, les écrans de projection à perles de verre ou à cannelures.

Les inconvénients que l'on constate en utilisant ces répartiteurs sont de deux sortes, l'une ayant trait à des défauts ou des carences dans la répartition elle-même, l'autre ayant trait à des inconvénients rencontrés dans leur utilisation.

D'abord, lorsque la répartition répond mal ou insuffisamment à ce qui est recherché. Par exemple, éclairages non homogènes, dans des angles solides mal ou même non maîtrisés, débordant notamment le champ souhaité en abaissant le rendement utile. Dans le cas des écrans de projection destinés à répartir la lumière reçue de projecteurs d'images dans une région de l'espace occupée par des observateurs, on constate fréquemment deux défauts. Le rayonnement renvoyé par l'écran est réparti au-delà de l'implantation des observateurs, ce qui en diminue l'intensité utile et ce qui affaiblit les contrastes des images du fait d'une lumière parasite revenant vers l'écran à partir des parois murales et du plafond. Et, aussi, la luminance de l'écran n'est pas homogène, parce que la répartition du rayonnement vers les observateurs est beaucoup plus correcte à partir du centre de l'écran qu'à partir de ses bords.

Ensuite, dans leur utilisation, les répartiteurs de rayonnement présentent souvent un trop grand encombrement ou sont peu maniables du fait, notamment, de leur rigidité.

Dans le cas des écrans de projection, en particulier des grands écrans auxquels on fait de plus en plus appel aujourd'hui, les plus performants du point de vue du gain en luminance comme de l'homogénéité, ont une courbure sphérique. De ce fait, ils sont rigides, non enroulables, ce qui présente un handicap notable.

On constate ainsi que, dans beaucoup de leurs domaines d'application, les répartiteurs de rayonnements électromagnétiques, ont chacun leurs avantages et leurs inconvénients propres, généralement incompatibles entre eux.

Dans le domaine de la projection d'images, concerné particulièrement mais de manière nullement exclusive, par la présente invention, il existe deux grandes catégories d'écrans.

D'une part, les écrans blancs qui sont lambertiens, c'est-à-dire qui répartissent la lumière de manière uniforme dans tout le demi-espace (de 2π stéradians) qui leur fait face. Ils sont, de ce fait, peu lumineux.

D'autre part, les écrans dits directionnels, à microbilles de verre ou à surface métallisée, généralement à base d'aluminium, qui répartissent la lumière reçue du projecteur dans un angle solide plus petit que 2π stéradians. Ils sont le plus souvent plans. De ce fait, la luminance qu'ils offrent décroît fortement de leur centre vers leurs bords, tant latéralement que verticalement. La lumière reçue du projecteur est renvoyée en s'écartant d'autant plus de l'axe de l'écran et donc en se perdant hors de l'implantation des observateurs, que le point éclairé sur l'écran est éloigné du centre. En outre, un écran à texture aléatoire homogène comme un écran « perlé » répartit le rayonnement selon des angles solides de révolution, ce qui ne tient pas compte de la dissymétrie qui existe généralement entre l'angle où sont situés les observateurs dans un plan horizontal, qui est grand, et l'angle dans lequel ils sont situés dans un plan vertical, qui est petit. Certains écrans présentent des cannelures verticales, leur directivité étant alors plus grande dans un plan horizontal que dans un plan vertical. Mais leur grand défaut reste la décroissance importante de la luminance depuis le centre jusqu'aux bords tant latéraux que verticaux, défaut qui est particulièrement fâcheux pour les grands écrans.

D'autres écrans directionnels présentent une courbure sphérique. Les écrans de ce type sont lisses, aluminisés. Un de leurs défauts réside en ce que, comme tous les écrans lisses, leur directivité est la même horizontalement et verticalement et que, étant rigides, leur manque de maniabilité est d'autant plus gênante qu'ils sont de grandes dimensions.

Un example de répartiteur selon l'art antérieur est connu de JP 55 133027A.

Afin de remédier aux divers inconvénients des répartiteurs de rayonnements existants et de réunir les divers avantages qu'on souhaite de plus en plus développer dans tous leurs domaines d'application et qui, jusqu'alors n'avaient pas été conciliés, l'invention a pour objet un répartiteur de rayonnement et, en particulier, un écran de projection.

De manière générale, ce répartiteur est substantiellement plan. Il est muni d'un très grand nombre d'éléments optiquement directionnels, dont les normales ont individuellement une orientation déterminée en fonction de la position de l'émetteur de rayonnement et d'une implantation donnée des récepteurs, pour assurer une répartition homogène qui enveloppe au plus près cette implantation, et procurer le meilleur niveau d'intensité et de qualité à la réception.

Plus précisément l'invention a pour objet un répartiteur de rayonnement électromagnétique, destiné à être associé à au moins un émetteur de rayonnement devant lui envoyer un faisceau lumineux et destiné à être disposé face à des récepteurs localisés dans une zone de l'espace et vers chacun desquels il doit renvoyer ledit faisceau, ce répartiteur étant du type substantiellement plan et ayant une surface qui présente une pluralité déterminée d'éléments réfléchissants dont les normales moyennes concourent dans la zone de l'espace où sont situés les récepteurs, optiquement directionnels, juxtaposés et distribués selon un réseau formé de deux familles de génératrices linéaires orthogonales entre elles, caractérisé en ce que chaque élément réfléchissant présente une surface à courbure convexe substantiellement cylindrique, optiquement active et la directrice et la génératrice de chacun des éléments réfléchissants sont respectivement dans des plans orthogonaux entre eux. Selon d'autres caractéristiques de l'invention :
- les génératrices des éléments réfléchissants ont une légère courbure pour prédéterminer l'angle de diffusion des rayonnements selon le plan de chaque génératrice;
- les éléments réfléchissants sont disposés en quinconce;
- chacun des éléments réfléchissants s'étend verticalement d'un bord à l'autre du répartiteur.

L'invention sera mieux comprise par la description détaillée faite ci-après en référence au dessin annexé. Bien entendu, la description et le dessin ne sont donnés qu'à titre d'exemple indicatif et non limitatif.

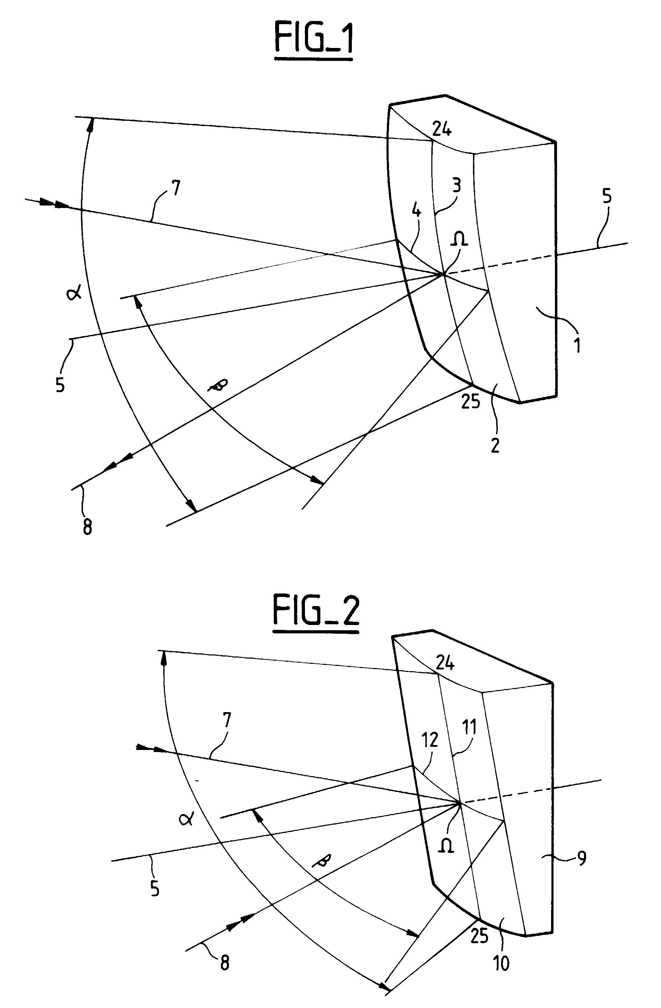

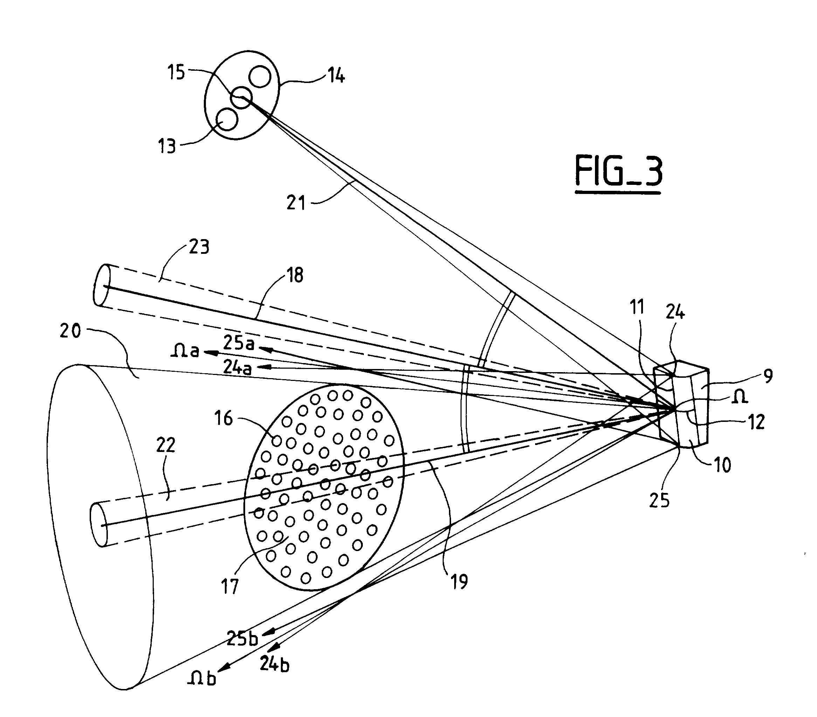

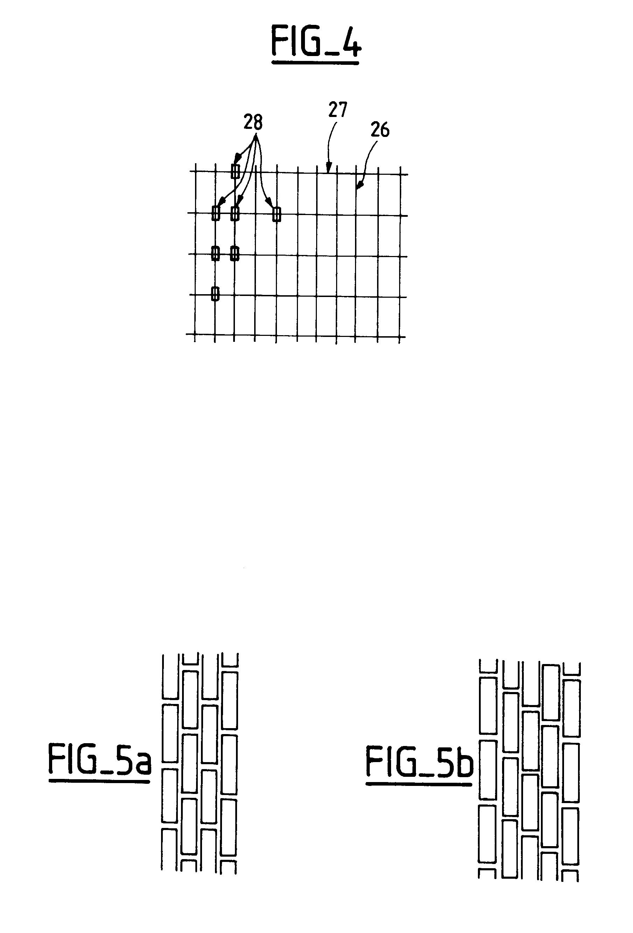

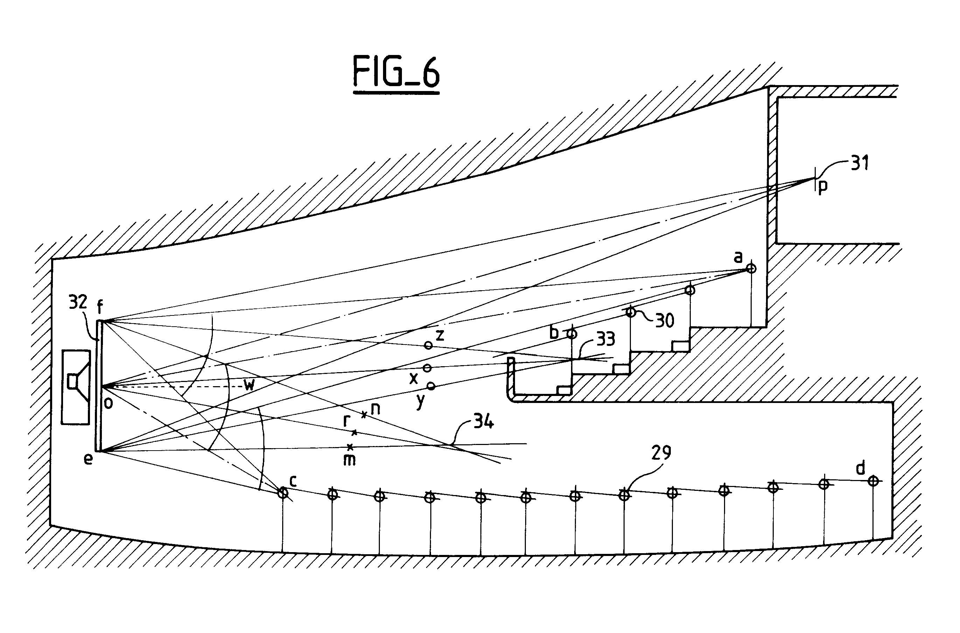

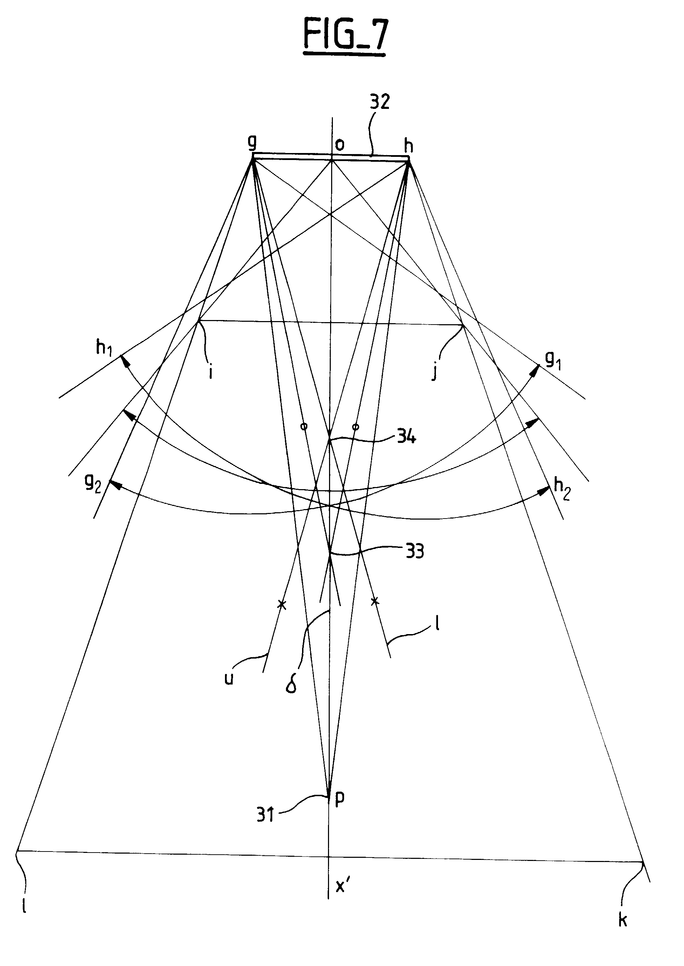

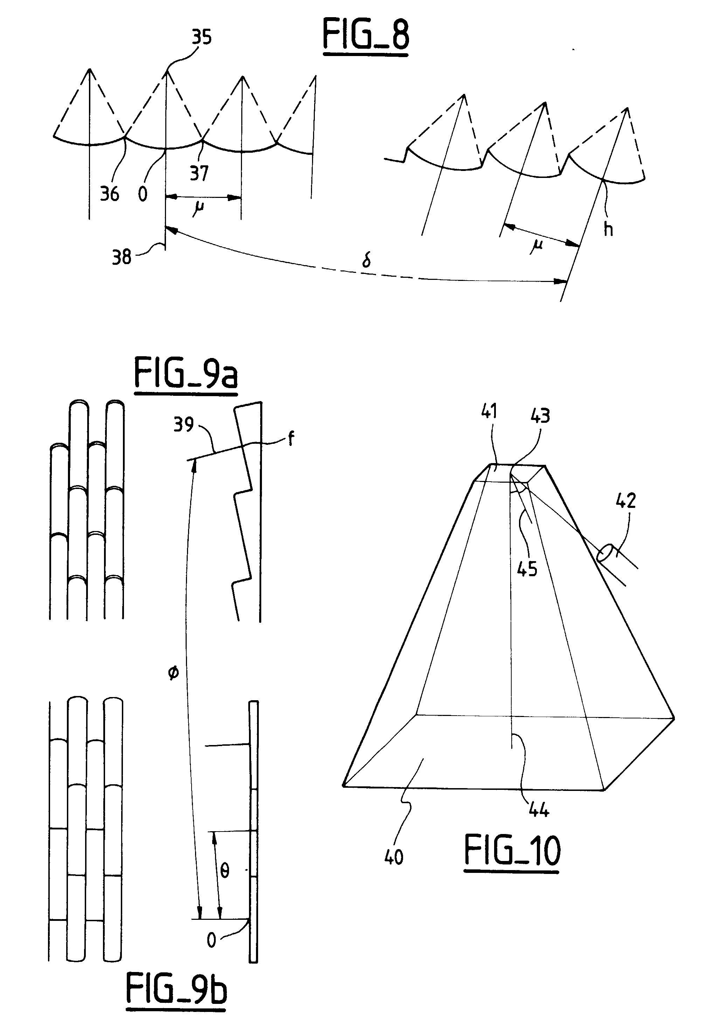

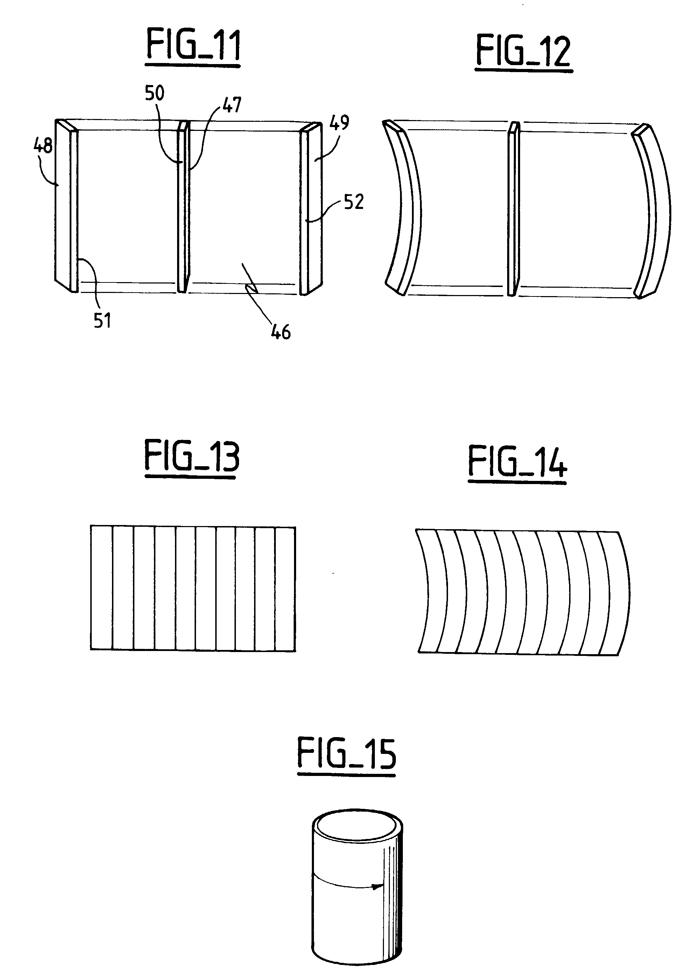

Sur ce dessin :
⇒ La figure 1 montre la conformation d'un élément réfléchissant qui est une alternative à l'invention, présentant une surface convexe à courbure torique.
⇒ La figure 2 montre la conformation d'un élément réfléchissant selon l'invention, présentant une surface convexe à courbure cylindrique.
⇒ La figure 3 montre très schématiquement ce qui caractérise une répartition de rayonnement à partir d'un élément réfléchissant selon l'invention.
⇒ La figure 4 montre un exemple de distribution des éléments réfléchissants selon un réseau à deux familles de génératrices linéaires orthogonales entre elles.
⇒ Les figures 5a et 5b montrent des exemples de décalages horizontaux en quinconces d'éléments alignés verticalement.
⇒ La figure 6 représente en coupe verticale une installation de projection d'images selon l'invention.
⇒ La figure 7 montre une vue en plan de la même installation.
⇒ La figure 8 montre en coupe horizontale la disposition des éléments au centre et au bord d'un écran de projection selon l'invention.
⇒ Les figures 9a et 9b montrent la disposition des éléments en façade verticale et en coupe de profil.
⇒ La figure 10 représente un répartiteur selon l'invention constituant un dispositif d'éclairage.
⇒ La figure 11 montre la disposition des éléments pour un écran plan équivalant géométriquement à un écran cylindrique.
⇒ La figure 12 montre la même disposition après cintrage de l'écran.
⇒ Les figures 13, 14 et 15 montrent les trois états d'un écran selon l'invention, respectivement à plat, cintré et enroulé sur lui-même.

La figure 1 montre schématiquement un élément réfléchissant 1 d'un répartiteur de rayonnement qui est une alternative à l'invention. Cet élément 1 est tel qu'il présente une surface optiquement active, convexe, 2 à courbure torique, ayant pour génératrice un arc de cercle tel que 3 et pour directrice un arc de cercle tel que 4. La normale moyenne à l'élément est la droite 5 passant par le centre Ω de ladite directrice. Le centre de révolution (non visible sur le dessin) de la surface torique est situé sur la droite 5. En outre, l'élément 1 est tel que sa normale moyenne 5 est individuellement orientée, du côté de la convexité de la surface, pour constituer la bissectrice de l'angle formé par le rayon lumineux moyen 7 reçu en son centre moyen Ω à partir du ou des émetteurs de rayonnement (non visibles sur cette figure) auxquels il est associé, et par le rayon lumineux moyen 8 renvoyé par ledit élément réfléchissant vers le centre moyen de la zone de l'espace (non visible sur cette figure) où sont localisés les récepteurs associés.

Sur la figure 2, l'élément réfléchissant 9, selon l'invention, est caractérisé en ce qu'il présente une surface convexe 10 à courbure cylindrique, ayant pour génératrice un segment de droite tel que 1 1 et pour directrice un arc de cercle tel que 12.

La figure 3 montre de manière explicite ce qui caractérise l'orientation individuelle de l'élément réfléchissant 9, par rapport aux émetteurs et aux récepteurs auxquels il est associé.

Les émetteurs de rayonnement, tels que 13, sont situés dans une zone 14 ayant un centre moyen 15. Les récepteurs du rayonnement à répartir, tels que 16, sont situés dans une région 17 dont le volume dans l'espace est déterminé.

En fonction de l'implantation des récepteurs 16 et de la position des émetteurs 13, l'orientation de l'élément 9 est caractérisée par celle de la normale moyenne 18 au centre moyen Q de sa surface réfléchissante. Cette normale moyenne 18 a une orientation caractérisée par l'égalité des angles qu'elle fait avec deux droites déterminées. La première de ces droites est l'axe moyen 19 de l'angle solide géométrique 20 ayant son sommet au centre Ω de l'élément 9 et enveloppant au plus près le volume de la région 17. La seconde des droites considérées, 21, joint le centre moyen Ω de l'élément au centre moyen 15 de la zone 14 où sont situés les émetteurs. La normale moyenne 18 fait avec l'axe moyen 19 et avec la droite 21 des angles égaux. De cette manière, l'élément 9 assure le renvoi optimum vers les récepteurs du rayonnement provenant des émetteurs.

Bien entendu, la région 17 ayant un volume dont les contours ne sont qu'approximativement définis, ou même peuvent légèrement varier, on doit considérer pour l'axe moyen 19, plutôt qu'une droite stricte, un petit angle solide 22, de l'ordre, par exemple, de quelques dix millièmes de radian, c'est-à-dire quelques degrés en angle plan, ce qui est tout à fait suffisant dans la pratique. En conséquence, on doit considérer pour l'orientation de la normale 18 un très petit angle solide 23.

En second lieu, l'élément 9 est caractérisé, selon l'invention, par la conformation optique de la totalité de sa surface active, en vue de répartir le rayonnement dans un angle solide dont les angles dans toutes les sections planes soient au moins égaux à ceux de l'angle solide géométrique 20. Sur la figure 3, à partir du centre moyen Q et des bords 24 et 25 de l'élément 1, le rayonnement est réparti entre, d'un côté de l'axe 19, les rayons Ωa, 24a, 25a et, de l'autre côté, les rayons Ωb, 24b, 25b, provenant respectivement des points Ω, 24, 25. La région 17 est ainsi tout entière à l'intérieur des angles limités par ces rayons.

La conformation optique de la surface active de l'élément 1 ou 2 est également définie par la plus ou moins grande diffusion selon laquelle les rayons sont renvoyés par elle. Il n'est pas souhaitable, dans la grande majorité des cas, qu'un répartiteur soit un miroir spéculaire. Ce qu'on attend de lui, c'est que, recevant un pinceau de rayonnement en un point de sa surface, il diffuse le rayonnement dans un angle solide de valeur déterminée autour d'une direction spéculaire définie par la courbure de cette surface. Cette valeur est, par exemple, pour les écrans de projection selon l'invention, de l'ordre de 15 à 20° des deux côtés de l'axe, dans une coupe plane.
Un grand avantage des répartiteurs de rayonnement selon l'invention, est que l'ensemble de leurs éléments peut constituer une surface géométriquement développable tout en étant équivalente à des répartiteurs à surface non développable, par exemple à courbure sphérique, ou ellipsoïdale, ou torique, avec, en outre, la faculté d'approprier la répartition à l'implantation des récepteurs.
Ainsi, la répartition du rayonnement réfléchi peut être différente dans le plan vertical et dans le plan horizontal.

La figure 4 représente très schématiquement une distribution selon un réseau à deux familles de génératrices linéaires orthogonales entre elles. Les génératrices sont des droites orthogonales parallèles dans chacune des deux familles, telles que 26 et 27. Les éléments, tels que 28, sont distribués selon ce réseau, mais l'on n'a représenté au dessin que quelques uns d'entre eux.

Les génératrices linéaires peuvent présenter entre elles des écarts linéaires de valeurs déterminées. Ces écarts peuvent être égaux entre eux selon un seul sens ou selon deux sens. Ils peuvent aussi croître ou décroître entre le centre et les bords. Autrement dit, ils peuvent présenter entre eux un « pas » linéaire, soit constant, soit variable.

Les écarts, de valeurs déterminées, peuvent être considérés non seulement linéairement mais aussi angulairement, les orientations des éléments distribués sur des génératrices linéaires de même famille présentant entre elles un écart constant, ou croissant ou décroissant entre le centre et les bords du répartiteur. Autrement dit, présentant un « pas » angulaire constant ou variable.

Les éléments optiquement directionnels peuvent avantageusement être décalés les uns par rapport aux autres afin de supprimer ou tout au moins d'atténuer les effets de lignes brillantes ou de lignes sombres que pourraient faire naître par leur contiguïté les inévitables hiatus qu'ils présentent entre eux. Sur les figures 5a et 5b sont représentés deux exemples où les éléments alignés dans le sens vertical, c'est-à-dire selon une des familles de génératrices linéaires orthogonales, sont décalés les uns par rapport aux autres horizontalement, selon l'autre famille.

Le répartiteur selon l'invention peut être un écran de projection associé à un ou plusieurs projecteurs d'images et à des observateurs implantés dans une certaine région de l'espace. Cette application est particulièrement intéressante.

Les figures 6 et 7 montrent un exemple d'installation de projection selon l'invention. La figure 6 en coupe méridienne verticale, la figure 7 en vue projective horizontale.

Sur la figure 6, est représentée schématiquement une salle de cinéma conforme aux normes actuellement en vigueur en France. Des observateurs, tels que 29, 30, sont assis dans des fauteuils implantés dans un espace s'étendant verticalement selon a, b, c, d. Un projecteur d'images 31 situé en un point p envoie de la lumière couvrant un écran de projection 32. Celui-ci est constitué d'une multitude d'éléments optiquement directionnels, chacun étant conformé, comme indiqué sur les figures 1 et 2, et chacun ayant une normale moyenne orientée comme il a été exposé en référence à la figure 3. Sur la figure 6, la détermination de ces orientations est présentée pour trois éléments de l'écran 32 : l'élément o, au centre de l'écran; l'élément e, au bord inférieur dans la coupe verticale méridienne ; l'élément f, au bord supérieur. Pour l'élément o, l'implantation des observateurs est comprise dans l'angle aoc, dont la bissectrice ou axe moyen est o-r. Selon l'invention, la normale moyenne au centre moyen de l'élément o, est la bissectrice o-x de l'angle rop formé par l'axe o-r et la droite o-p. Pour l'élément e, l'implantation des observateurs est comprise dans l'angle aec, d'axe e-m. La normale moyenne est la bissectrice e-y de l'angle mep. Pour l'élément f, l'implantation des observateurs est comprise dans l'angle afc, d'axe f-n. La normale moyenne est la bissectrice f-z de l'angle nfp.

Chacun des éléments diffuse la lumière dans un angle solide dont l'axe est le rayon réfléchi spéculairement à partir du rayon incident envoyé par le projecteur au centre moyen de l'élément, l'angle de réflexion étant égal à l'angle d'incidence par rapport à la normale moyenne. Par exemple, au point o, le rayon incident est p-o. Il se réfléchit spéculairement autour de la normale o-x selon le rayon o-r, qui se trouve confondu avec l'axe de l'angle aoc enveloppant l'implantation des observateurs, puisque, selon l'invention, la normale moyenne o-x a été déterminée comme bissectrice de l'angle rop. Ainsi, la lumière reçue par l'élément o est diffusée vers les observateurs dans un angle solide qui a le même axe que l'angle solide géométrique aoc enveloppant, au plus près, à partir du point o, l'implantation des observateurs dans le plan vertical. Il en va de même pour les éléments e et f. Les angles embrassant l'implantation des observateurs à partir des points o, e, f, sont indiqués sur la figure par des arcs limités par des flèches.

Ces angles, ont, dans cet exemple, une valeur d'environ 40°. Il suffit donc que le revêtement réfléchissant des génératrices, telles que 3 (figure 1), des éléments, diffuse la lumière dans un angle d'au moins 20° autour du rayon spéculaire, pour que tous les observateurs la reçoivent dans les plans verticaux. Cet ordre de grandeur de 20° est aisé à obtenir dans la pratique. Il est avantageux que, par contre, l'angle de diffusion excède le moins possible cet ordre de grandeur. Ce serait inutile et cela diminuerait le gain en luminance obtenu par l'écran. La conformation optique des éléments, telle que décrite en référence aux figures 1 et 2 et aux figures 6 et ci-après 7 et 8, permet d'assurer la répartition optimale.

On constate, dans cet exemple, que les normales moyennes x, y, z des éléments o, e, f, convergent sensiblement vers une zone restreinte 33, ce qui est lié au fait que les axes moyens r, m, n des angles enveloppant géométriquement l'implantation des observateurs, convergent eux-mêmes vers une zone restreinte 34, comme cela se produit pour les types les plus courants d'installations. La droite e-f équivaut optiquement à un arc circulaire dont le centre serait situé dans la zone restreinte 33.

On remarque aussi que l'axe géométrique Q-w de l'écran ne coïncide pas avec la normale o-x en son centre. Il est donc nécessaire d'incliner légèrement l'écran de manière à faire coïncider o-w et o-x. Les constructions de la figure 6 sont faites avec une position verticale de l'écran, ce qui, optiquement, n'introduit pas d'écarts sensibles. On peut, également, orienter de manière légèrement différente les éléments optiquement directionnels pour compenser l'écart minime entre o-x et o-w. Lorsque, dans d'autres cas, l'écart s'avère plus important, il convient, soit d'incliner l'écran en conséquence, soit de conformer l'écran de manière que son centre optique se trouve être le pied de la perpendiculaire menée d'un point moyen de la zone 33 au plan de l'écran en position verticale.

Sur la figure 7, est représentée très schématiquement la même installation en vue projective horizontale. L'implantation des observateurs s'inscrit dans un trapèze i j k l, tel, selon les normes en vigueur en France, que l'angle i o j ait une valeur plus petite que 100° et que les côtés i-l et j-k du trapèze fassent avec l'axe ox' (projection géométrique de o-x sur le plan horizontal passant par o, de la figure 6) un angle d'environ 20°. Les bords latéraux de l'écran sont en g et h. La projection géométrique du projecteur P est (31) dans le plan de la figure 7. Celle de la zone 33 en (33).

Les différences entre les valeurs vraies des angles dans un plan incliné passant par o et p et leurs valeurs dans le plan horizontal de la figure 7, sont minimes. Dans l'exemple décrit, l'angle de ces plans w o p étant de l'ordre de 15°, la relation entre lesdites valeurs est de l'ordre de 1°, comme cela ressort de la formule trigonométrique bien connue liant les angles à leur projection sur un plan.

La même construction géométrique que celle décrite en référence à la figure 6, montre que les angles solides dans lesquels est diffusée la lumière à partir des éléments o, g, h, de l'écran ont pour axes o-x', g-t, h-u concourant en une zone restreinte (34), elle-même étant sensiblement la projection géométrique de la zone 34 de la figure 6.

L'écran 32, plan, équivaut donc optiquement par sa totalité à un écran à courbure sphérique de centre géométrique 33.

Afin que les angles solides dans lesquels la lumière est diffusée à partir des éléments o, g, h enveloppent entièrement l'implantation des observateurs, ces éléments sont conformés, selon l'invention, pour diffuser la lumière dans un angle horizontal beaucoup plus grand que dans un angle vertical. Sur la figure 7, les angles enveloppant au plus près cette implantation sont déterminés à partir de la valeur de l'angle i o j, à partir du centre de l'écran. Cet angle a une valeur d'environ 80°, dans cet exemple. Des angles de même valeur sont représentés sur la figure 7 à partir des éléments g et h, par des arcs limités par des flèches. Ils s'étendent respectivement entre les directions g-g1 et g-g2 et entre les directions h-h1 et h-h2.

Ce résultat est obtenu grâce à la conformation optique des éléments, selon l'invention, déjà représentée grosso modo sur les figures 1 et 2, et de manière plus explicite sur la figure 3.

La figure 8 montre la forme et l'orientation individuelle des éléments optiquement directionnels, selon une coupe horizontale au centre de l'écran. La partie gauche de la figure correspond au centre de l'écran, la partie droite à un bord latéral. On y retrouve l'élément o et l'élément h représentés par leurs positions géométriques sur la figure 7. Tous ces éléments, de o à h, présentent une courbure identique mais sont orientés différemment. Pour l'élément o, par exemple, la courbure est en arc de cercle, de centre 35 et s'étendant entre les points 36 et 37. Dans cet exemple, l'angle au centre de l'arc a une valeur de 60°. Un grand angle solide de diffusion est assuré par la courbure, les rayons spéculaires extrêmes faisant un angle d'environ 120°, par exemple. Il en va de même pour l'élément h.

L'angle entre les normales moyennes des éléments o et h est égal à l'angle δ représenté sur la figure 7. L'orientation des normales des éléments entre o et h varie progressivement selon un « pas » angulaire µ dont la valeur est égale à celle de l'angle δ divisée par le nombrc des éléments entre o et h. Cette variation progressive de l'orientation des éléments introduit peu à peu, à partir du centre, des décalages entre les extrémités des arcs dans le plan horizontal. Ces décalages, d'abord quasi insensibles dans la région centrale, s'accentuent, au fur et à mesure que les éléments sont plus éloignés du centre. Si les éléments sont petits, les décalages restent très faibles. Par exemple, pour un écran de 4 mètres de base et des éléments dont les arcs ont une corde de 2 millimètres, le décalage le plus grand entre l'élément h et l'élément précédent est de l'ordre de 0,4 millimètres, pour un rayon de courbure de l'écran sphérique équivalent de l'ordre de 8 mètres.

Les figures 9a et 9h montrent la forme et l'orientation individuelle des éléments optiquement directionnels, selon une coupe verticale au centre de l'écran. Dans ce plan, ce sont les génératrices telles que 3 et 11 sur les figures 1 et 2, qui sont représentées. Au centre de l'écran, la normale moyenne 38 de l'élément o est orientée selon l'axe de l'écran. Au fur et à mesure que les éléments s'écartent du centre, leurs normales moyennes s'inclinent en convergeant vers la zone 33 représentée sur la figure 6, jusqu'à l'orientation selon 39 pour l'élément f. Les décalages, d'abord insensibles, s'accentuent jusqu'à l'élément f, au bord supérieur de l'écran. L'angle entre les normales moyennes des éléments o et f, désigné par Φ sur les figures 9a et 9b, est égal à l'angle entre les directions o-w et f2 sur la figure 6. L'orientation des normales aux éléments entre o et f varie progressivement selon un « pas » angulaire Θ dont la valeur est égale à celle de Φ divisée par le nombre des élément entre o et f.

Tous ces éléments sont en relief convexe sur l'écran, plan. L'écran peut être en matière plastique moulée, tel qu'élastomère de polyuréthanne, et renforcé de fibres de verre et métallisé, notamment à l'aluminium. Le moule comporte alors une multitude de portions de cylindres en creux dont l'orientation des normales moyennes aux génératrices linéaires est particulière à chaque élément, convergeant toutes vers une zone restreinte. Cette structure peut être réalisée sur une plaque d'aluminium au moyen d'une fraise guidée par une commande numérique à cinq axes, ou par tout autre procédé, tel que la stéréolithographie au moyen d'un laser.

Dans le cas d'un fraisage, l'écran vu de face a un aspect tel que représenté sur la figure 9b, au centre de l'écran et sur la figure 9a à son bord supérieur. La disposition des éléments est en quinconce avec décalage simple à l'horizontale.

Un écran de projection selon l'invention présente un certain nombre d'avantages :
- Il est plan.
- Il est enroulable.
- Il concentre vers les observateurs le rayonnement selon des angles d'ouverture prédéterminés comme optimaux, différents horizontalement (par exemple 100°) et verticalement (par exemple 40°).
- Il présente une luminance très homogène. Son gain en luminance est par exemple de l'ordre de 4 à 5 pour une ouverture de 100° x 40°.
- Il améliore les contrastes et la saturation des couleurs en dirigeant hors de l'implantation des observateurs les rayonnements parasites renvoyés vers l'écran par les parois et le plafond.

Les divers avantages et spécialement le gain en luminosité et l'amélioration des contrastes sont tout particulièrement appréciables pour la vidéoprojection sur grand écran.

Les répartiteurs selon l'invention concernent tous les domaines spectraux des rayonnements électromagnétiques. Ils peuvent constituer des appareils d'éclairage, en lumière visible ou en rayonnement infrarouge (« lumière noire »). Le rayonnement concerné peut être ultraviolet, notamment dans une installation de bronzage artificiel ou de traitements médicaux. Ces répartiteurs peuvent être utilisés pour répartir le rayonnement thermique, en vue de chauffer des surfaces ou des volumes déterminés. Ils peuvent être mis en oeuvre dans des fours à micro-ondes pour répartir le rayonnement émis par magnétron. Ils peuvent, de manière originale, constituer des revêtements muraux tels que «papiers peints », gaufrés conformément aux structures proposées selon l'invention, afin de répartir de manière déterminée la lumière provenant des fenêtres d'un local.

La figure 10 représente très schématiquement un répartiteur de rayonnement selon l'invention, constituant un appareil d'éclairage. La surface à éclairer est un rectangle 40, horizontal. Un répartiteur 41 reçoit la lumière provenant d'un projecteur d'éclairage 42. A partir du centre moyen 43 du répartiteur, l'angle solide enveloppant la surface 40 a pour axe la droite joignant le centre 43 au centre 44 de cette surface. L'élément optiquement directionnel situé au centre 43 du répartiteur a une normale moyenne 45 qui est la bissectrice de l'angle formé par la droite joignant les centres 43 et 44, et la droite joignant le centre 43 au centre moyen du projecteur d'éclairage 42. Tous les autres éléments du répartiteur ont des normales moyennes déterminées de même manière. Ce qui a été décrit précédemment vaut pour tous les répartiteurs selon l'invention.

Un autre cas est celui de répartiteurs destinés à être utilisés avec une courbure rendue non plane, représentés sur les figures 11 et 12. Sur la figure 11 est représenté d'abord un écran de projection, 46, dont les éléments optiquement directionnels tels que 47, 48, 49, s'étendent verticalement d'un bord à l'autre de l'écran. Chacun de ces éléments présente une surface à courbure cylindrique, telle que 50, 51, 52. Les normales moyennes aux surfaces courbes telles que 50, 51, 52 sont orientées selon l'invention, c'est-à-dire convergentes. Cet écran plan est équivalent à un écran à courbure cylindrique dont le centre de courbure se trouverait au centre où convergent les normales moyennes aux éléments 47, 48, 49 et dont les génératrices seraient verticales. Cet écran peut être rendu géométriquement équivalent à un écran à courbure sphérique si, lors de son utilisation, on le cintre comme représenté schématiquement sur la figure 12. Il présente alors aux observateurs une surface cylindrique concave dont les génératrices sont horizontales. Cette nouvelle courbure à génératrices horizontales, se combinant avec la courbure cylindrique à génératrices verticales à laquelle équivaut l'écran plan tel que représenté sur la figure 11, donne comme résultante un effet d'ensemble à double courbure, autrement dit équivalant à l'effet d'une courbure sphérique.

Les figures 13, 14, 15 représentent par des schémas les dispositions de tels écrans, correspondant aux figures 11 et 12. Selon ces schémas, ces écrans sont respectivement à plat (figure 13), cintrés (figure 14) ou enroulés (figure 15).

## Revendications

1. Répartiteur de rayonnement électromagnétique, destiné à être associé à au moins un émetteur (15) de rayonnement devant lui envoyer un faisceau lumineux et destiné à être disposé face à des récepteurs (16) localisés dans une zone de l'espace et vers chacun desquels il doit renvoyer ledit faisceau, ce répartiteur étant du type substantiellement plan et ayant une surface qui présente une pluralité déterminée d'éléments réfléchissants (9) dont les normales moyennes (5) concourent dans la zone de l'espace où sont situés les récepteurs, optiquement directionnels, juxtaposés et distribués selon un réseau formé de deux familles de génératrices linéaires (26,27) orthogonales entre elles, caractérisé en ce que chaque élément réfléchissant présente une surface (10) à courbure convexe substantiellement cylindrique, optiquement active et la directrice (12) et la génératrice (11) de chacun des éléments réfléchissants sont respectivement dans des plans orthogonaux entre eux.

2. Répartiteur de rayonnement selon la revendication 1, caractérisé en ce que les génératrices des éléments réfléchissants ont une légère courbure pour prédéterminer l'angle de diffusion des rayonnements selon le plan de chaque génératrice.

3. Répartiteur de rayonnement selon la revendication 1, caractérisé en ce que les éléments réfléchissants sont disposés en quinconce.

4. Répartiteur selon la revendication 1, caractérisé en ce que chacun des éléments réfléchissants s'étend verticalement d'un bord à l'autre du répartiteur.

## Claims

1. Distributor of electromagnetic radiation, intended to be associated with at least one emitter (15) of radiation that has to send it a light beam and intended to be arranged facing receptors (16) localised in a zone of space and towards each of which it has to return said beam, this distributor being of the substantially plane type and having a surface that has a predetermined plurality of reflecting elements (9), the mean normals (5) of which converge in the zone of space where the optically directional receivers are located, juxtaposed and distributed in a network formed of two families of linear generatrices (26, 27) orthogonal to each other, characterised in that each reflecting element has a surface (10) with a substantially cylindrical, optically active convex curvature, and the directrix (12) and the generatrix (11) of each of the reflecting elements are respectively in the planes orthogonal to each other.

2. Radiation distributor according to Claim 1, characterised in that the generatrix of the reflecting elements have a slight curvature in order to predetermine the scattering angle of the radiation in the plane of each generatrix.

3. Radiation distributor according to Claim 1, characterised in that the reflecting elements are arranged in a staggered manner.

4. Distributor according to Claim 1, characterised in that each of the reflecting elements extends vertically from one edge of the distributor to the other.

## Patentansprüche

1. Verteiler für elektromagnetische Strahlung, der mit mindestens einem Strahler (15) verknüpft ist, der dem Verteiler einen lichtstarken Strahl zusendet, und der zu Empfängern (16) hin angeordnet ist, die sich in einem Bereich des Raums befinden und den zurückgeschickten Strahl vom Verteiler erhalten, wobei der Verteiler im wesentlichen flach ist und eine Oberfläche aufweist, die mehrere bestimmte reflektierende Elemente (9) umfaßt, deren gemittelte Normalen (5) im Bereich des Raums zusammenlaufen, indem die optisch richtungsabhängigen Empfänger nebeneinander angeordnet und auf einem Netz verteilt sind, wobei das Netz aus zwei Gruppen von linearen Erzeugenden (26, 27) gebildet wird, die zueinander senkrecht sind,
dadurch gekennzeichnet, daß
jedes reflektierende Element eine optisch aktive Oberfläche (10) aufweist, die eine konvexe im wesentlichen zylindrische Krümmung hat, und daß sich die Leitkurve (12) und die Erzeugende (11) aller reflektierenden Elemente in Ebenen befinden, die zueinander senkrecht sind.

2. Verteiler für Strahlung nach Anspruch 1, dadurch gekennzeichnet, daß die Erzeugenden der reflektierenden Elemente eine leichte Krümmung aufweisen, um den Streuwinkel der Strahlung in der Ebene jeder Erzeugenden festzulegen.

3. Verteiler für Strahlung nach Anspruch 1, dadurch gekennzeichnet, daß die reflektierenden Elemente versetzt angeordnet sind.

4. Verteiler nach Anspruch 1, dadurch gekennzeichnet, daß sich jedes reflektierende Element von einem Rand des Verteilers vertikal zum anderen erstreckt.
